# EUROPÄISCHE PATENTSCHRIFT

(11) **EP 2 860 703 B1**
(45) Veröffentlichungstag und Bekanntmachung des Hinweises auf die Patenterteilung: **22.06.2016**
(21) Anmeldenummer: 13187687.2
(22) Anmeldetag: 08.10.2013
(51) Int. Cl.: G07B 15/06

(54) **Verfahren zum Überprüfen von Mauttransaktionen und Komponenten hierfür**
Method for checking toll transactions and components therefor
Procédé de vérification de transactions de péage et composants associés

(43) Veröffentlichungstag der Anmeldung: 15.04.2015
(73) Patentinhaber: Kapsch TrafficCom AG, 1120 Wien (AT)
(72) Erfinder: Nagy, Oliver, 1190 Wien (AT); Povolny, Robert, 1190 Wien (AT)
(74) Vertreter: Weiser, Andreas

(56) Entgegenhaltungen:
- EP-A1- 2 500 869
- EP-A1- 2 530 654
- EP-A1- 2 538 363
- EP-A1- 2 541 502
- EP-A2- 1 708 143

## Beschreibung

Die vorliegende Erfindung betrifft ein Verfahren zum Überprüfen von Mauttransaktionen sowie eine fahrzeuggestützte Anordnung und einen Transaktionsserver hiefür.

Im zukünftigen Europäischen Elektronischen Mautdienst (European Electronic Toll System, EETS) sollen fahrzeuggestützte Onboard-Units (OBUs) sowohl mit "infrastrukturgebundenen" als auch "infrastrukturlosen" Straßenmautsystemen interoperabel sein. Infrastrukturgebundene Straßenmautsysteme basieren auf einem Netz geografisch verteilter Mautbaken, welche über Kurzreichweitenfunk mit OBUs passierender Fahrzeuge kommunizieren, um diese auf den jeweiligen Bakenort zu lokalisieren und so Ortsnutzungen zu vermauten. Infrastrukturlose Straßenmautsysteme basieren auf satellitengestützt "selbstverortenden" OBUs, die Positionsmeldungen bzw. Mauttransaktionen über ein Mobilfunknetz an eine Zentrale senden. Eine EETS-kompatible OBU muss daher sowohl einen Kurzreichweiten-Sendeempfänger, beispielsweise nach den Standards DSRC (dedicated short range communication), CEN-DSRC, UNI-DSRC, IEEE 802.11p bzw. WAVE (wireless access for vehicular environments) bzw. ITS-G5, zur Kommunikation mit den Mautbaken des infrastrukturgebundenen Straßenmautsystems als auch einen Satellitennavigationsempfänger und ein Mobilfunkmodul zur Kommunikation mit dem Mobilfunknetz des infrastrukturlosen Straßenmautsystems aufweisen. Eine solche Multifunktions-OBU ist daher überaus aufwendig aufgebaut und erfordert auch umfangreiche Prüfungen und Zertifizierungen, damit sie die Genauigkeits- und Sicherheitsanforderungen des jeweiligen Straßenmautsystemes erfüllt, um Mautberechnungsfehler und Mautbetrügereien zu verhindern.

Die Erfindung setzt sich zum Ziel, eine Multifunktions-OBU für interoperable Straßenmautsysteme zu schaffen, welche einfacher aufgebaut ist und geringeren Prüfungs- und Zertifizierungsaufwand erfordert als die bekannten Systeme, ohne die Vermautungs- und Betrugssicherheit des Gesamtsystems zu unterminieren. Ein weiteres Ziel der Erfindung ist die Schaffung eines Überprüfungsverfahrens für Mauttransaktionen solcher Multifunktions-OBUs sowie hiefür geeigneter Mautbaken und Transaktionsserver.

In einem ersten Aspekt schafft die Erfindung dazu ein Verfahren zum Überprüfen von Mauttransaktionen, die aus Positionsmeldungen eines über ein Mobilfunknetz mit einem Transaktionsserver in Verbindung stehenden Mobiltelefons erzeugt werden, mit Hilfe eines Netzes verteilter Mautbaken, die über Kurzreichweitenfunk mit Onboard-Units passierender Fahrzeuge kommunizieren können und mit dem Transaktionsserver in Verbindung stehen, umfassend:
Mitführen eines Mobiltelefons und einer Onboard-Unit auf einem Fahrzeug;
Generieren einer Sitzungskennung, Austauschen der Sitzungskennung zwischen Mobiltelefon und Onboard-Unit und Senden der Sitzungskennung an den Transaktionsserver;
Erzeugen von Positionsmeldungen im Mobiltelefon und Versenden der Positionsmeldungen unter der Sitzungskennung an den Transaktionsserver zur Erzeugung von Mauttransaktionen;
wenn die Onboard-Unit eine Mautbake passiert, Protokollieren der Passage in einem Bakenprotokoll unter der Sitzungskennung; und
im Transaktionsserver, Gegenprüfen der für die Sitzungskennung erzeugten Mauttransaktionen mit dem für die Sitzungskennung erstellten Bakenprotokoll.

Gemäß der Erfindung wird eine interoperable Multifunktions-OBU aus einem GNSS- (global navigation satellite system) -fähigen Mobiltelefon einerseits und einer DSRC- (dedicated short range communication) -fähigen OBU andererseits aufgebaut, welche über eine gemeinsame Schnittstelle Daten austauschen. Über diese Schnittstelle kann eine im Straßenmautsystem (zumindest temporär) eindeutige Kennung, die Sitzungskennung, ausgetauscht werden, welche ein Bindeglied zwischen den infrastrukturlosen Vermautungsfunktionen der Multifunktions-OBU einerseits und den infrastrukturgebundenen Vermautungsfunktionen der Multifunktions-OBU andererseits bildet. Mit Hilfe des Überprüfungsverfahrens der Erfindung können so die hochsicheren und hochgenauen Positionierungsdaten von Mautbaken eines infrastrukturgebundenen Straßenmautsystems, welchen eine im GNSS- bzw. infrastrukturlosen Betrieb arbeitende Multifunktions-OBU auf ihrem Weg begegnet, zur Überprüfung der GNSS-basierten Mauttransaktionen herangezogen werden, sodass Vermautungsfehler und Betrugsversuche, welchen ein infrastrukturloses Straßenmautsystem ausgesetzt ist, erkannt und geahndet werden können. Die Erfindung schafft damit ein interoperables Straßenmautsystem mit hoher Vermautungs- und Betrugssicherheit auf Basis weniger und kostengünstiger Komponenten mit geringem Zertifizierungsaufwand.

Gemäß einer ersten bevorzugten Variante der Erfindung wird beim Passieren einer Mautbake eine Bakenkennung von der Mautbake an die Onboard-Unit gesendet und in einem ersten Bakenprotokoll in der Onboard-Unit gespeichert und das erste Bakenprotokoll mit der Sitzungskennung über das Mobiltelefon an den Transaktionsserver zur Gegenprüfung gesandt. Das zur Gegenprüfung der GNSS-basierten Positionsmeldungen verwendete Bakenprotokoll wird somit von jeder Multifunktions-OBU selbst auf ihrem Weg gesammelt, was nur wenig Veränderung an dem bestehenden Mautbakennetz erfordert.

In einer alternativ oder zusätzlich zur ersten Variante ausführbaren zweiten Variante der Erfindung wird beim Passieren einer Mautbake die Sitzungskennung von der Onboard-Unit an die Mautbake und von dort mit einer Bakenkennung an den Transaktionsserver gesandt und im Transaktionsserver werden alle zu der Sitzungskennung empfangenen Bakenkennungen in einem zweiten Bakenprotokoll gespeichert. Hier sammelt das Mautbakennetz die Bakenpassagen einer Multifunktions-OBU unter einer bestimmten Sitzungskennung, was den OBU-Teil der Multifunktions-OBU entlastet, sodass mit kostengünstigeren OBUs mit geringerer Rechenleistung das Auslangen gefunden werden kann.

In einer dritten Variante, bei welcher sowohl ein erstes Bakenprotokoll in einer Multifunktions-OBU und ein zweites Bakenprotokoll von den Mautbaken gesammelt wird, kann zusätzlich vorgesehen werden, dass beim Gegenprüfen auch das zweite Bakenprotokoll gegen das erste Bakenprotokoll gegengeprüft wird. Dies führt eine weitere Sicherheitsstufe in das System ein, indem nicht nur entweder die von den Multifunktions-OBUs auf ihrem Weg in Form der ersten Bakenprotokolle gesammelten Bakenpassagen oder die von den Mautbaken in Form der zweiten Bakenprotokolle gesammelten OBU-Passagen zur Überprüfung herangezogen werden können, sondern beide Bakenprotokolle, und zwar sowohl zur gegenseitigen Überprüfung als auch zur Überprüfung der GNSS-basierten Positionsmeldungen.

Eine weitere vorteilhafte Ausführungsform des Verfahrens der Erfindung umfasst die folgenden Merkmale:
beim Passieren der Mautbake: Aufnehmen eines Fahrzeugmerkmals mit einem Detektor der Mautbake und Speichern des Fahrzeugmerkmals unter der Sitzungskennung in der Mautbake; und,
wenn das Gegenprüfen im Transaktionsserver eine Unstimmigkeit anzeigt, Senden des gespeicherten Fahrzeugmerkmals von der Mautbake an den Transaktionsserver.

Dadurch können die von einer Multifunktions-OBU im GNSS-Betrieb passierten Mautbaken auch gleichzeitig zur Deliktahndung ("Enforcement") eingesetzt werden. In Abkehr von bekannten DSRC-Lösungen wird vorsorglich bei jeder Bakenpassage einer Multifunktions-OBU ein Fahrzeugmerkmal aufgenommen; ergibt die spätere Gegenprüfung im Transaktionsserver, dass ein Berechnungsfehler, Mautdelikt oder Betrugsversuch im GNSS-basierten Mautbetrieb auftrat, kann das bei der entsprechenden Mautbake aufgenommene Fahrzeugmerkmal zum Enforcement verwendet werden, weil es das Passieren dieser Bake beweist.

Bevorzugt ist der Detektor eine Kamera und das Fahrzeugmerkmal ein äußeres Erscheinungsmerkmal des Fahrzeugs, sodass als Enforcement-Beweis z.B. ein Bild des Fahrzeugs oder seiner Nummerntafel herangezogen werden kann.

Um für den Fahrzeug-Nutzer Schutz seiner personenbezogenen Daten - wie Nummerntafel oder Aufenthaltsort des Fahrzeugs - sicherzustellen, können bevorzugt die aufgenommenen Fahrzeugmerkmale bzw. Bilder unter Zuhilfenahme der Sitzungskennung verschlüsselt werden, um eine missbräuchliche Verwendung zu verhindern. Ist eine Mauttransaktion geprüft und für korrekt befunden wurden, kann die Sitzungskennung im Transaktionsserver gelöscht werden und somit ist eine Entschlüsselung gespeichert, verschlüsselter Fahrzeugmerkmale oder Bilder nicht mehr möglich.

Das Gegenprüfen von Mauttransaktionen im Transaktionsserver erfolgt bevorzugt durch einen Kartenabgleich ("map matching") zwischen geografischen Positionen von in dem oder den Bakenprotokoll(en) anhand ihrer Bakenkennungen gespeicherten Mautbaken und den Positionsmeldungen. Die geografischen Positionen der Mautbaken sind hochgenau vorbekannt, sodass sie als Referenz für die geografische Überprüfung der in den Positionsmeldungen einer Multifunktions-OBU im GNSS-Betrieb übermittelten Positionsdaten herangezogen werden können.

Für die Schnittstelle in der Multifunktions-OBU zwischen Mobiltelefon und Onboard-Unit wird bevorzugt ein handelsüblicher Nahbereichs-Funkkommunikationsstandard verwendet, wie WLAN, WiFi^{®}, Bluetooth^{®}, RFID (radio frequency identification) oder - insbesondere bevorzugt - NFC (near field communication). NFC-fähige Mobiltelefone finden zunehmend Verbreitung. Der Vorteil von NFC ist seine extrem geringe Reichweite, was ein unmittelbares In-die-Nähe-Bringen ("swipe") des Mobiltelefons zur Onboard-Unit erfordert, um eine temporäre NFC-Verbindung zu errichten. Durch Streichen ("Swiping") des Mobiltelefons über die Onboard-Unit kann so das Generieren der Sitzungskennung und damit Starten von Sitzungen im Mobiltelefon und der Onboard-Unit veranlasst werden; durch nochmaliges "Swiping" das Beenden dieser Sitzungen und Absenden des ersten Bakenprotokolls von der Onboard-Unit über das Mobiltelefon an den Transaktionsserver.

Bevorzugt wird das erste Bakenprotokoll in der Onboard-Unit kryptographisch verschlüsselt und in dieser Form an das Mobiltelefon gesandt. Dadurch kann verhindert werden, dass Applikationen im Mobiltelefon das Bakenprotokoll auf seinem Sendeweg zum Transaktionsserver lesen oder gar manipulieren.

Optional kann bei zumindest einem der genannten Schritte des Sendens der Sitzungskennung jeweils auch eine Onboard-Unit-Kennung mitgesandt werden. Dadurch kann der Transaktionsserver zusätzlich eine Zuordnung zwischen Sitzungskennung und Onboard-Unit-Kennung durchführen, was das Enforcement erleichtert.

In einem zweiten Aspekt schafft die Erfindung eine Multifunktions-OBU in Form einer fahrzeuggestützten Anordnung für das vorgestellte Verfahren, umfassend:
ein Mobiltelefon mit einem Satellitenempfänger zur Positionsbestimmung und einem Mobilfunkmodul zur Positionsmeldung über ein Mobilfunknetz an einen Transaktionsserver, und
eine Onboard-Unit mit einem Kurzreichweiten-Sendeempfänger zur Funkkommunikation mit einer Mautbake,
wobei das Mobiltelefon und die Onboard-Unit dafür ausgebildet sind, über eine gemeinsame Funkschnittstelle eine Sitzungskennung auszutauschen, welche das Mobiltelefon in einer Positionsmeldung über das Mobilfunknetz und die Onboard-Unit in einer Funkkommunikation mit einer Mautbake verwendet.

Schließlich schafft die Erfindung in einem dritten Aspekt einen Transaktionsserver für das genannte Verfahren, mit einer ersten Schnittstelle zu einem Mobilfunknetz und einer zweiten Schnittstelle zu einem Netz geografisch verteilter Mautbaken, wobei der Transaktionsserver dafür ausgebildet ist, über die erste Schnittstelle empfangene Positionsmeldungen eines Mobiltelefons mit über die erste und/oder zweite Schnittstelle empfangenen Bakenprotokollen, in welchen vom Mobiltelefon passierte Mautbaken angegeben sind, gegenzuprüfen.

Weitere Merkmale und Vorteile des Verfahrens, der Multifunktions-OBU und des Transaktionsserver der Erfindung werden nun anhand bevorzugter Ausführungsbeispiele unter Bezugnahme auf die begleitenden Zeichnungen näher beschrieben, in denen zeigen:
Fig. 1 ein Straßenmautsystem mit erfindungsgemäßen Komponenten schematisch im Überblick;
Fig. 2 ein Blockschaltbild einer fahrzeuggestützten Anordnung ("Multifunktions-OBU") des Straßenmautsystems von Fig. 1;
die Fig. 3a und 3b das Verfahren der Erfindung in Form eines Sequenzdiagramms; und
die Fig. 4 bis 6 in dem Verfahren von Fig. 3 auftretende Positionsdaten- und Bakenprotokolle.

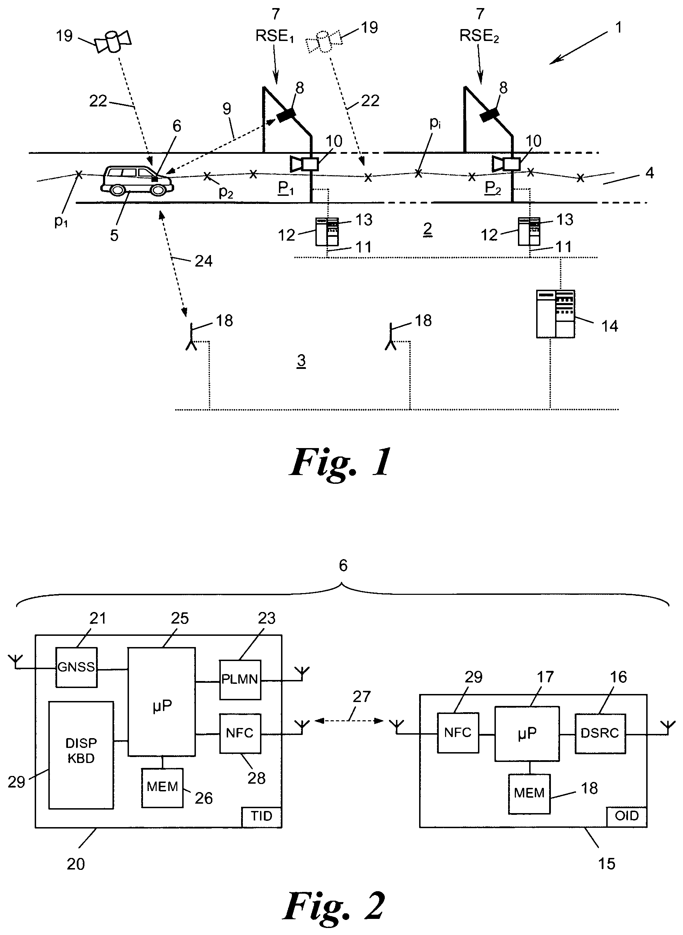

Fig. 1 zeigt in komprimierter Form ein Straßenmautsystem 1, das aus einem infrastrukturgebundenen Teil 2 und einem infrastrukturlosen Teil 3 besteht. In dem Straßenmautsystem 1 bewegt sich beispielhaft auf einer Straße 4 ein Fahrzeug 5, welches eine interoperable, d.h. mit beiden Teilen 2, 3 funktionsfähige, Multifunktions-Onboard-Unit (Multifunktions- bzw. MF-OBU) 6 mitführt, hier auch als "fahrzeuggestützte Anordnung" bezeichnet.

Der infrastrukturgebundene Teil 2 des Straßenmautsystems 1 umfasst eine Vielzahl über das Netz von Straßen 4 verteilter Mautbaken (roadside entities) 7 bzw. RSE₁, RSE₂, ..., allgemein RSEₙ, die jeweils einen Kurzreichweiten-Sendeempfänger 8 zur Funkkommunikation 9 mit einer die Bake 7 passierenden MF-OBU 6, einen Detektor 10 zur Aufnahme eines Merkmals des die MF-OBU 6 mitführenden Fahrzeugs 5, z.B. eine Kamera zur Aufnahme eines Fahrzeugbildes, sowie eine Schnittstelle 11 aufweisen, welche Komponenten 8, 10, 11 allesamt von einem lokalen Prozessor 12 mit Speicher 13 gesteuert werden. Über die Schnittstellen 11 stehen die Baken 7 mit einem (oder mehreren) zentralen Transaktionsserver(n) 14 des Straßenmautsystems 1 in Verbindung.

Aufgrund der begrenzten Reichweite der Funkverbindung 9 kann ein Fahrzeug 5, genauer seine MF-OBU 6, bei der Passage einer Bake 7 bzw. RSEₙ auf den jeweils bekannten Ort Pₙ der Bake 7 lokalisiert und daraus eine die Ortsnutzung registrierende oder vermautende Mauttransaktion TR für den Transaktionsserver 14 erzeugt werden, sei es direkt in der Mautbake 7 erzeugt und über die Schnittstelle 11 an diesen gesandt, oder erst im Transaktionsserver 14 aufgrund von der Mautbake 7 erhaltener Daten erzeugt.

Der Sendeempfänger 8 und damit die Funkverbindung 9 haben eine Funkreichweite von maximal einigen m, einigen zehn m oder einigen hundert m, wie es beispielsweise durch die Standards DSRC (dedicated short range communication), CEN-DSRC, UNI-DSRC, IEEE 802.11p bzw. WAVE (wireless access for vehicular environments) bzw. ITS-G5 einschließlich WLAN und Wifi^{®}, Bluetooth^{®} oder auch aktive und passive RFID-Technologien (radio frequency identification) implementiert wird. Alle diese Standards werden hier der Einfachheit halber unter dem Begriff "DSRC" zusammengefasst, und der Teil 2 des Straßenmautsystems 1 demgemäß auch als DSRC-Teil 2 bezeichnet.

Zum Zusammenwirken mit dem DSRC-Teil 2 umfasst die MF-OBU 6 gemäß Fig. 2 einen DSRC-Teil 15 (auch "DSRC-OBU" oder kurz "OBU" genannt) mit einem Kurzreichweiten-Sendeempfänger 16 zur Errichtung der Funkverbindung 9 und einen diesen steuernden Prozessor 17 mit Speicher 18. Im DSRC-Teil 2 des Straßenmautsystems 1 ist jede MF-OBU 6 durch eine OBU-Kennung OID der OBU 15 identifiziert, und jede Mautbake 7 bzw. RSEₙ durch eine Baken-Kennung BIDₙ.

Der infrastrukturlose Teil 3 des Straßenmautsystems 1 besitzt - wie der Name schon sagt - keine dedizierte straßenseitige Infrastruktur, sondern verwendet ein bestehendes Mobilfunknetz 18 (von dem nur einige Basisstationen stellvertretend gezeigt sind) sowie ein bestehendes Netz von Navigationssatelliten 19 (einige beispielhaft gezeigt). Das Mobilfunknetz 18 (public land mobile network, PLMN) kann von jeder in der Technik bekannten Art sein, beispielsweise ein 3G-, 4G- oder 5G-Mobilfunknetz nach den Standards GSM, UMTS, LTE usw. Das Satellitennetz 19 kann jedes bekannte GNSS (global navigation satellite system) sein, z.B. ein GPS-, GLONASS- oder GALILEO-Netz. Der Teil 3 des Straßennetzes 1 wird der Einfachheit halber auch als GNSS-Teil 3 bezeichnet.

Zum Zusammenwirken mit dem GNSS-Teil 3 des Straßenmautsystems 1 besitzt die MF-OBU 6 einen GNSS-Teil 20, der einen Satellitenempfänger 21 zum Empfang 22 von Positionssignalen des Satellitennetzes 19, ein Mobilfunkmodul 23 zur Kommunikation 24 im Mobilfunknetz 18, sowie einen die Komponenten 21, 23 steuernden Prozessor 25 mit Speicher 26 aufweist. Mit Hilfe des Satellitenempfängers 21 werden fortlaufend die geografische Position des Fahrzeugs 5 bzw. der MF-OBU 6 bestimmt, daraus Positionsdaten ("position fixes") p₁, p₂, ..., allgemein p₁, erzeugt und als Positionsmeldungen pos₁, pos₂, ..., allgemein posᵢ, über das Mobilfunkmodul 23 und das Mobilfunknetz 18 an den Transaktionsserver 14 gesandt. Der Transaktionsserver 14 kann so aus den erhaltenen Positionsmeldungen posᵢ Mauttransaktionen TR erzeugen, welche die Ortsnutzungen des Fahrzeugs 5 registrieren oder vermauten. Alternativ werden bereits in der MF-OBU 6 vom Prozessor 25 aus den Positionsdaten pᵢ "fertige" Mauttransaktionen TR erzeugt und in Form der Positionsmeldungen posᵢ an den Transaktionsserver 14 gesandt, d.h. die Positionsmeldungen posᵢ können sowohl "rohe" Positionsdaten pᵢ als auch bereits verarbeitete "fertige" Mauttransaktionen TR enthalten.

Gemäß Fig. 2 ist die MF-OBU 6 für die eingangs erörterten Zwecke nicht als ein einziger Hardware-Bauteil aufgebaut, sondern eine Anordnung aus zwei gesonderten, jeweils den GNSS-Teil 20 einerseits und den DSRC-Teil 15 andererseits verkörpernden Komponenten zusammengesetzt, die über eine Schnittstelle 27 temporär miteinander kommunizieren können.

Die Schnittstelle 27 ist beispielsweise eine Kurzreichweiten-Funkschnittstelle nach den oben für die DSRC-Schnittstelle 9 erörterten Standards wie WLAN, WiFi^{®}, Bluetooth^{®} oder RFID. Bevorzugt ist die Schnittstelle 27 jedoch eine Nahbereichs-Funkschnittstelle von extrem kurzer Funkreichweite, insbesondere nach dem NFC-Standard (near field communication). Eine solche NFC-Schnittstelle 27 ist ausschließlich für den Nahbereich ausgelegt, d.h. auf einige cm oder einige zehn cm begrenzt, sodass die Komponenten 20 und 15 der MF-OBU 6 in unmittelbare Nähe zueinander gebracht werden müssen, um für diese Zeitspanne der Annäherung eine temporäre NFC-Verbindung 27 einzugehen. Ein solches "In-die-Nähe-Bringen" wird beispielsweise durch ein Darüberstreichen ("Swiping") des GNSS-Teils 20 über den DSRC-Teil 15 für die kurze Zeitspanne des Darüberstreichens errichtet.

Zu diesem Zweck umfassen die Komponenten 20, 15 jeweils ein Kurzreichweiten-Kommunikationsmodul 28, 29, z.B. ein NFC-Kommunikationsmodul. Dabei ist es möglich, dass eines der Module 28, 29 als Reader bzw. Requester und das jeweils andere Modul als Transponder bzw. Responder ausgebildet ist, beispielsweise das Modul 28 als RFID-Reader und das Modul 29 als RFID-Transponder ("tag"), oder umgekehrt. Alle diese Varianten werden hier unter den Begriffen "NFC-Verbindung" und "NFC-Modul" zusammengefasst. Die NFC-Module 28, 29 werden in den Komponenten 20, 15 durch den jeweiligen Prozessor 25 bzw. 17 gesteuert.

Der GNSS-Teil 20 der MF-OBU 6 kann beispielsweise durch ein entsprechend programmiertes und NFC-, RFID- oder Bluetoothfähiges Mobiltelefon realisiert werden. Unter den Begriff "Mobiltelefon" fällt dabei jedwede Art von Kommunikationsgerät, das in dem Mobilfunknetz 18 kommunizieren kann und zusätzlich mit einem Kurzreichweiten-Kommunikationsmodul 28 ausgestattet ist, beispielsweise ein Funktelefon, Smartphone, Notebook- oder Tablet-PC, Personal Digital Assistant (PDA) usw. Ein solches Mobiltelefon hat in der Regel auch eine Anzeige- und Eingabeeinrichtung 29 für den Benutzer, z.B. einen Bildschirm mit Tastatur oder einen Touchscreen. Der DSRC-Teil 15 der MF-OBU 6 kann wiederum durch eine "herkömmliche" OBU für ein DSRC-Straßenmautsystem gebildet werden, die zusätzlich mit einem Kurzreichweiten-Kommunikationsmodul 29 ausgestattet wird.

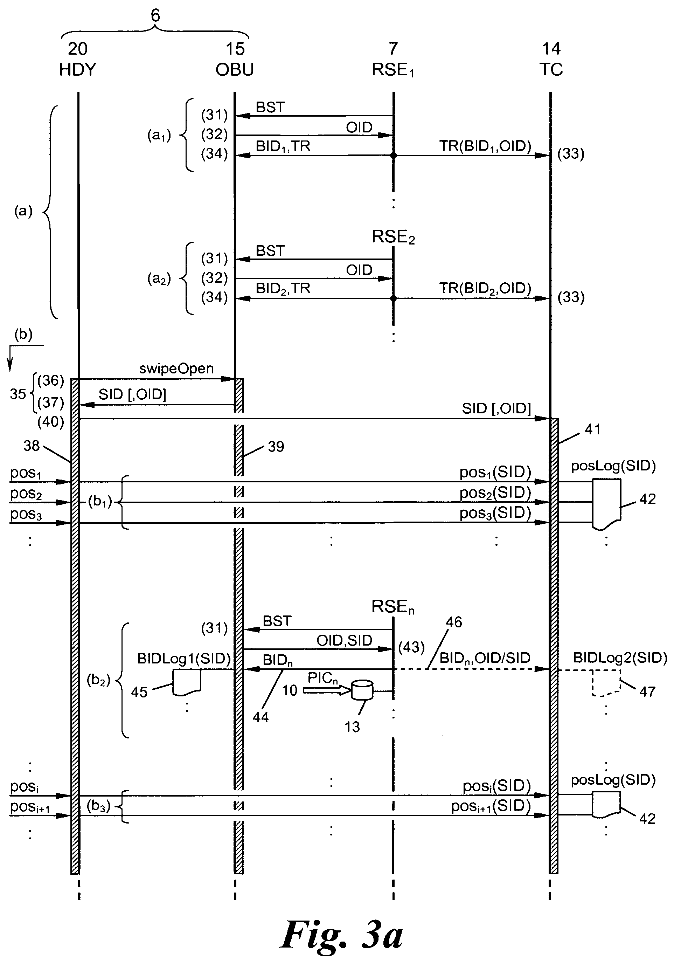

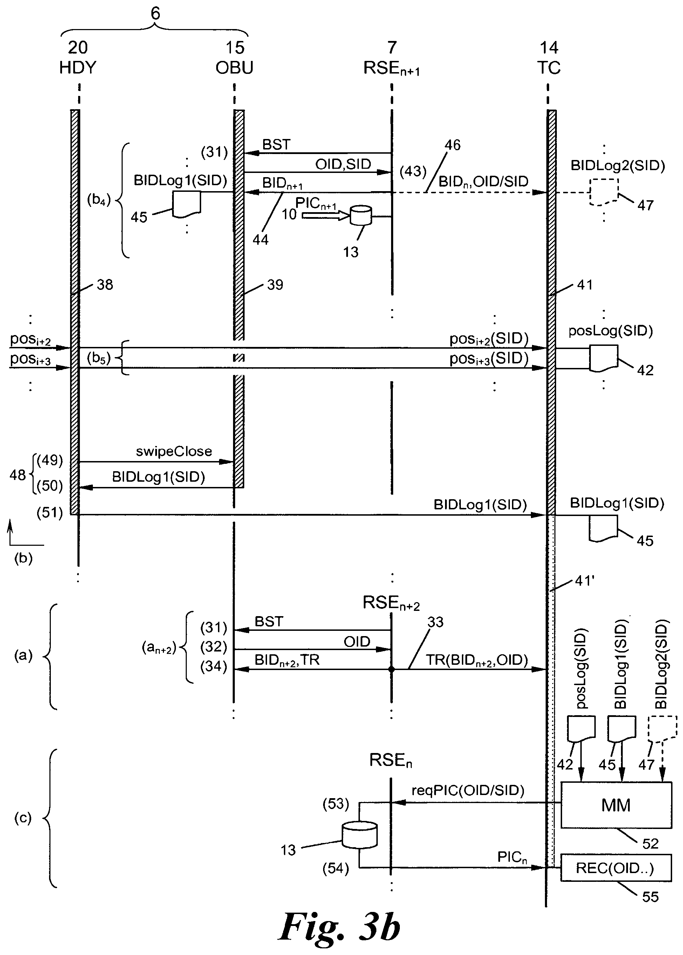

Die Fig. 3 bis 6 zeigen ein Verfahren zum Überprüfen von Mauttransaktionen in dem Straßenmautsystem 1 unter Verwendung der in den Fig. 1 und 2 gezeigten Komponenten. Das Sequenzdiagramm von Fig. 3 wurde wegen seiner Größe auf die Fig. 3a und 3b aufgeteilt; Fig. 3b zeigt die Fortsetzung von Fig. 3a.

Abschnitt (a) von Fig. 3a zeigt eine Phase des Verfahrens, in der eine MF-OBU 6 zunächst - in der Art einer herkömmlichen DSRC-OBU - ausschließlich mit dem DSRC-Teil 2 des Straßenmautsystems 1 zusammenwirkt. Beispielhaft dargestellt sind zwei DSRC-Transaktionen a₁, a₂ mit verschiedenen Mautbaken 7 bzw. RSE₁, RSE₂ auf dem Weg des Fahrzeugs 5. Bei jeder DSRC-Transaktion a₁, a₂ fordert eine Mautbake 7 die MF-OBU 6, genauer deren DSRC-Teil 15, über die Funkschnittstelle 9 zur Antwort auf, beispielsweise mit der DSRC-Nachricht "BST" (beacon service table) 31. Die MF-OBU 6 antwortet daraufhin - in einer oder mehreren Funkkommunikationen 9 - mit ihrer OBU-Kennung OID (Schritt 32, vereinfacht dargestellt), woraufhin die Mautbake 7 eine Bakentransaktion TR erzeugt und (sofort oder später) unter ihrer Bakenkennung BIDₙ an den Transaktionsserver 14 sendet (Schritt 33). Optional kann die Mautbake 7 ihre Bakenkennung BIDₙ und/oder die Mauttransaktion TR an die MF-OBU 6 zurücksenden (Schritt 34).

Abschnitt (b) von Fig. 3 zeigt eine Phase des Verfahrens, in welcher die MF-OBU 6 als GNSS-OBU im GNSS-Teil 3 des Straßenmautsysems 1 fungiert, wobei sie jedoch durch den DSRC-Teil 2 des Straßenmautsystems 1 kontrolliert bzw. gegengeprüft wird. Dazu initiiert der Benutzer am GNSS-Teil 20, im Weiteren auch "Mobiltelefon" (HDY) genannt, eine erste temporäre NFC-Verbindung 35 über die Funkschnittstelle 27 zum DSRC-Teil 15 der MF-OBU 6, beispielsweise durch ein "Swiping" des Mobiltelefons 20 über OBU 15 (Schritt 36). Das Swiping 36 veranlasst die Generierung einer im Straßenmautsystem 1 eindeutigen Sitzungskennung ("Session-ID") SID, z.B. einer sehr großen Zufallszahl, deren nochmaliges Auftreten im Straßenmautsystem 1 extrem unwahrscheinlich ist. Die Sitzungskennung SID kann im Mobiltelefon 20 generiert und über die NFC-Schnittstelle 27 an die OBU 15 gesandt werden, oder in der OBU 15 generiert und über die NFC-Schnittstelle 27 an das Mobiltelefon 20 gesandt werden; jedenfalls wird die Sitzungskennung SID zwischen Mobiltelefon 20 und OBU 15 ausgetauscht (Schritt 37). Optional kann die OBU 15 im Schritt 37 auch ihre OBU-Kennung OID an das Mobiltelefon 20 senden.

Unter der Sitzungskennung SID werden nun sowohl im Mobiltelefon 20 als auch in der OBU 15 jeweils eine Sitzung 38 bzw. 39 gestartet. Im Schritt 40 sendet das Mobiltelefon 20 die Sitzungskennung SID (optional auch die OBU-Kennung OID, falls erhalten) über das Mobilfunknetz 18 an den Transaktionsserver 14, welcher daraufhin ebenfalls eine Sitzung 41 unter der Sitzungskennung SID eröffnet.

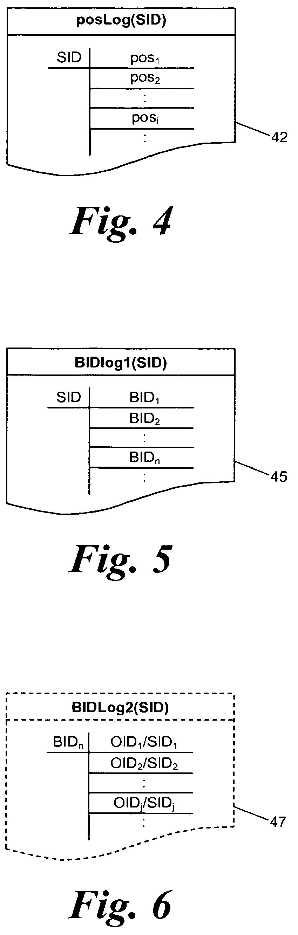

Die weiteren beispielhaften Phasen b₁, b₃ und b₅ in Fig. 3 zeigen nun Vermautungsphasen, in denen die MF-OBU 6 als GNSS-OBU fungiert und mit Hilfe ihres Satellitenempfängers 21 generierte Positionsmeldungen posᵢ über das Mobilfunknetz 18 an den Transaktionsserver 14 absetzt. Dabei werden die Positionsdaten posᵢ jeweils zusammen mit der Sitzungskennung SID an den Transaktionsserver 14 versandt, sodass dieser alle empfangenen Positionsdaten posᵢ der Sitzungskennung SID zuordnen und in einem Positionsdatenprotokoll posLog(SID) 42 (siehe auch Fig. 4) speichern kann. Optional können in den Positionsmeldungen posᵢ auch die OBU-Kennung OID mitgesandt und dann gleich im Transaktionsserver 14 dem Positionsdatenprotokoll 42 zugeordnet werden. Das Positionsdatenprotokoll 42 kann dann zur Erzeugung von "GNSS-basierten" Mauttransaktionen TR im Transaktionsserver 14 verwendet werden, oder es enthält bereits direkt - wenn die Positionsmeldungen posᵢ "fertige" Mauttransaktionen TR waren - diese Mauttransaktionen.

In den weiteren beispielhaft dargestellten Phasen b₂ und b₄ des Verfahrens begegnet die MF-OBU 6, während sie im GNSS-Mautbetrieb (b) ist, auf ihrem Weg nun weiteren Mautbaken 7, hier den beispielhaften Mautbaken RSEₙ und RSEₙ₊₁, welche zur Überprüfung der GNSS-basierten Mauttransaktionen TR wie folgt eingesetzt werden.

Wenn eine MF-OBU 6 bei der Passage einer Mautbake 7 zur Reaktion aufgefordert wird (Schritt 31), dann antwortet sie in den Phasen b₂ und b₄ nicht nur mit ihrer OBU-Kennung OID, sondern auch mit ihrer aktuellen Sitzungskennung SID (Schritt 43). Die Mautbake 7 weiß nun, dass "im Hintergrund" eine GNSS-Vermautung über den GNSS-Teil 3 läuft (Sitzungen 38, 39, 41), und reagiert nun anders als in den Phasen a₁ und a₂, wo sie keine Sitzungskennung SID erhalten hatte: Sie sendet nun im nächsten Schritt 44 ihre eigene Baken-Kennung BIDₙ an die passierende MF-OBU 6 zurück, welche die so empfangenen Baken-Kennungen BIDₙ aller Bakenpassagen in einem ersten Bakenprotokoll BIDLog1 (SID) 45 sammelt. Alternativ oder zusätzlich kann die Mautbake 7 in einem Schritt 46 die OBU-Kennung OID und/oder die Sitzungskennung SID der passierenden MF-OBU 6 zusammen mit ihrer Baken-Kennung BIDₙ an den Transaktionsserver 14 senden, welcher diese Informationen in einem zweiten Bakenprotokoll BIDLog2(SID) 47 sammelt.

Zusätzlich nimmt die Mautbake 7 mit dem Detektor 10 ein Merkmal des Fahrzeugs 5 auf, beispielsweise ein Bild PICₙ des Fahrzeugs 5, und speichert dieses im Speicher 13 der Mautbake 7 unter der Sitzungskennung SID, optional in einer mit Hilfe der Sitzungskennung SID verschlüsselten Form. Der Detektor 10 der Mautbake 7 kann jedes beliebige charakteristische Merkmal eines Fahrzeugs 5 aufnehmen, beispielsweise die äußere Form oder ein Teil davon wie Fahrzeugaufbau, Achsanzahl, Größe, Breite und/oder Höhe, das Gewicht des Fahrzeugs, sein Fahrzeugkennzeichen, beispielsweise ein Bild der Kennzeichentafel des Fahrzeugs 5, auf welchem das Fahrzeugkennzeichen mittels optischer Bilderkennungsverfahren (optical character recognition, OCR) gelesen werden kann, usw. In diesem Sinne kann der Detektor 10 beispielsweise ein die Form des Fahrzeugs abtastender Laser- oder Radarscanner, eine oder mehrere Lichtschranken, ein Gewichtssensor und/oder eine Foto- oder Filmkamera sein.

Die Baken-Kennungen BIDₙ aller Mautbaken 7, die das Fahrzeug 5 während der GNSS-Vermautungsphase (b) passiert, sammeln sich somit im ersten Bakenprotokoll BIDLog1 (SID) 45 der MF-OBU 6 und/oder im zweiten Bakenprotokoll BIDLog2(SID) 47 des Transaktionsservers 14 an; die passierten Mautbaken 7 fertigen dabei gleichzeitig Aufzeichnungen PICₙ von Merkmalen der passierenden Fahrzeuge 5 an.

Zur Beendigung der GNSS-Vermautungsphase (b) errichtet der Benutzer nun eine zweite temporäre NFC-Verbindung 48 über die NFC-Schnittstelle 27, beispielsweise durch ein erneuertes "Swiping" des Mobiltelefons 20 über die OBU 15 (Schritt 49). Die OBU 15 sendet nun das akkumulierte erste Bakenprotokoll BIDLog1 (SID) 45 an das Mobiltelefon 20 (Schritt 50) und beendet bzw. schließt die Sitzung 39. Das Mobiltelefon 20 sendet das erhaltene erste Bakenprotokoll BIDLog1 (SID) 45 im Schritt 51 über das Mobilfunknetz 18 an den Transaktionsserver 14 und beendet ebenfalls seine Sitzung 38. Auch im Transaktionsserver 14 kann nun die unter der Sitzungskennung SID laufende Sitzung 41 beendet werden; gegebenenfalls wird die Sitzungskennung SID noch weiter aufbewahrt (siehe Prozess 41'), wie später noch beschrieben.

Das erste Bakenprotokoll BIDLog1 (SID) 45 kann in der OBU 15 kryptographisch verschlüsselt werden, bevor es in Schritt 50 an das Mobiltelefon 20 gesandt wird, um zu verhindern, dass das Mobiltelefon 20, eine Applikation darin oder der Benutzer die Daten im Bakenprotokoll 45 lesen oder manipulieren kann. Beispielsweise kann das erste Bakenprotokoll 45 dazu auch mit einer kryptographischen Signatur und/oder einer Prüfsumme (Hashwert) versehen werden, welche dann im Transaktionsserver 14 auf Authentizität und/oder Integrität geprüft werden kann. Die Verschlüsselung des ersten Bakenprotokolls 45 kann beispielsweise mit Hilfe eines Public/Private-Key Verfahrens durchgeführt werden, dessen privater Schlüssel in der OBU 15 zum Verschlüsseln und dessen öffentlicher Schlüssel im Transaktionsserver 14 zum Entschlüsseln verwendet wird.

Nach Beendigung der GNSS-Vermautungsphase (b) kehren die MF-OBU 6 und in weiterer Folge die von ihr passierten Baken 7 wieder in den DSRC-Vermautungsmodus (a) zurück, siehe die beispielhafte Bakenpassage aₙ₊₂ mit den Schritten 31 bis 34.

In einer anschließenden Validierungsphase (c) des Verfahrens verfügt nun der Transaktionsserver 14 sowohl über die von einer MF-OBU 6 in der GNSS-Vermautungsphase (b) erzeugten bzw. verursachten Mauttransaktionen TR in Form des Positionsdatenprotokolls posLog(SID) 42, sei es, dass dieses "rohe" Positionsdaten pᵢ oder "fertige" Mauttransaktionen TR enthält, als auch über das erste Bakenprotokoll BIDLog1 (SID) 45, welches von der MF-OBU 6 in dieser Phase auf Grundlage der Bakenpassagen b₃, b₄ gesammelt wurde. In einem Validierungs- bzw. Gegenprüfungsschritt 52 können somit die für eine Sitzungskennung SID erzeugten Mauttransaktionen TR bzw. posLog(SID) mit dem zu derselben Sitzungskennung SID empfangenen ersten Bakenprotokoll BIDLog1 (SID) 45 gegengeprüft bzw. verglichen werden, um Unstimmigkeiten zu detektieren. Eine solche Unstimmigkeit kann beispielsweise darin liegen, dass der vom Positionsdatenprotokoll posLog(SID) 42 bzw. den darauf beruhenden oder darin enthaltenen Mauttransaktionen TR angegebene Weg des Fahrzeugs 5 nicht mit den Orten Pₙ der im ersten Bakenprotokoll BIDLog1 (SID) 45 angegebenen Mautbaken 7 übereinstimmt oder umgekehrt. Dies zeigt z.B. eine Fehlfunktion des Straßenmautsystems 1 oder betrügerische Manipulationen an der MF-OBU 6 an.

Alternativ oder zusätzlich kann eine weitere Gegenprüfung mit den von den Mautbaken 7 gemeldeten MF-OBU-Passagen, welche in Bezug auf die jeweilige Sitzungskennung SID in Form des zweiten Bakenprotokolls BIDLog2(SID) 47 gesammelt werden, durchgeführt werden. Das zweite Bakenprotokoll BIDLog2(SID) 47 kann dabei gegen das erste Bakenprotokoll BIDLog1 (SID) 45 und/oder das Positionsdatenprotokoll posLog(SID) 42 bzw. die Mauttransaktionen TR gegengeprüft werden.

Der Gegenprüfungsschritt 52 kann beispielsweise einen Kartenabgleich ("map matching") zwischen den von den verschiedenen Protokollen 42, 45, 47 angezeigten Wegen des Fahrzeugs 5 im Straßenmautsystem 1 mit den vorbekannten Orten Pₙ der Mautbaken 7 bzw. RSEₙ sein, z.B. unter zur Hilfenahme digitaler Straßenkarten, welche mögliche Wege für Fahrzeuge 5 und die Orte Pₙ der Mautbake 7 enthalten.

Es versteht sich, dass die Bakenprotokolle 45, 47 auch jeweils nur komprimierte Angaben der passierten Mautbaken 7 enthalten können, beispielsweise einen Hashwert der Bakenkennungen BIDₙ der passierten Mautbaken 7. Der Transaktionsserver 7 kann dann einen Vergleichs-Hashwert aus den ihm bekannten Bakenkennungen BIDₙ jener Mautbaken 7, welche die Multifunktions-OBU 6 auf ihrem gemäß den Positionsdaten posLog(SID) 42 angebenen Weg passiert haben müsste, berechnen und dann mit dem/den in dem/den Bakenprotokoll(en) 45, 47 angegebenen Hashwert(en) vergleichen, um Unstimmigkeiten zu detektieren. Derartige komprimierte (gehashte) Bakenprotokolle 45, 47, welche die Bakenkennungen BIDₙ nicht mehr im Klartext, sondern z.B. nur mehr in Form eines Hashwerts oder einer Prüfsumme enthalten, fallen ebenfalls unter die hier verwendeten Begriffe "Bakenprotokolle".

Im Falle einer Unstimmigkeit kann der Transaktionsserver 14 in einem (optionalen) Schritt 53 von der entsprechenden Mautbake 7 bzw. RSEₙ das dort im Speicher 13 unter der Sitzungskennung SID aufgezeichnete Fahrzeugmerkmal PICₙ anfordern, beispielsweise ein Bild des Fahrzeugs 5, und zurückerhalten (Schritt 54). Wenn das Fahrzeugmerkmal PICₙ mit der Sitzungskennung SID verschlüsselt worden war, ist die Sitzungskennung SID bis zu diesem Zeitpunkt im Transaktionsserver 14 aufzubewahren, siehe Prozess 41', um sie zur Entschlüsselung des Fahrzeugmerkmals PICₙ zu verwenden. Sitzungskennungen SID für Mauttransaktionen TR, die im Schritt 52 für in Ordnung befunden wurden, können gelöscht werden (auch schon in Schritt 52), um eine weitere Entschlüsselung der gespeicherten Fahrzeugmerkmale PICₙ von "korrekten" Fahrzeugen zu verhindern.

In einem Schritt 55 wird ein Enforcement-Datensatz REC angefertigt, welcher die detektierte Unstimmigkeit in Verbindung mit dem ermittelten Fahrzeugmerkmal PICₙ sowie der Sitzungskennung SID und/oder der OBU-Kennung OID (wenn letztere mitübersandt und der Sitzungskennung SID zugeordnet wurde) enthält. Wenn die OBU-Kennung OID im Transaktionsserver 14 an dieser Stelle nicht verfügbar ist, kann der Enforcement-Datensatz REC auch lediglich die Sitzungskennung SID enthalten.

Es versteht sich, dass eine MF-OBU 6, die in der GNSS-Vermautungsphase (b) Positionsmeldungen posᵢ an den Transaktionsserver 14 über das Mobilfunknetz 18 sendet, dabei jeweils auch eine Teilnehmerkennung TID des Mobiltelefons 20 im Mobilfunknetz 18 mitsendenkann, z.B. eine IMSI (international mobile subscriber identification), TIMSI (temporary international mobile subscriber identification), IMEI (international mobile e-quipment identifier) od.dgl., anhand welcher eine GNSS-basierte Mauttransaktion TR einem Abrechnungskonto im Mobilfunknetz 18 angelastet werden kann. Für ausschließlich GNSS-basierte Mauttransaktionen TR ist daher die Zuordnung der Sitzungskennung SID und/oder der OBU-Kennung OID zur Teilnehmerkennung TID nicht zwingend erforderlich, sondern optional.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Überprüfen von Mauttransaktionen, die aus Positionsmeldungen eines über ein Mobilfunknetz (18) mit einem Transaktionsserver (14) in Verbindung stehenden Mobiltelefons (20) erzeugt werden, mit Hilfe eines Netzes verteilter Mautbaken (7), die über Kurzreichweitenfunk (9) mit Onboard-Units (15) passierender Fahrzeuge (5) kommunizieren können und mit dem Transaktionsserver (14) in Verbindung stehen, umfassend:
Mitführen eines Mobiltelefons (20) und einer Onboard-Unit (15) auf einem Fahrzeug (5);
Generieren einer Sitzungskennung (SID), Austauschen der Sitzungskennung (SID) zwischen Mobiltelefon (20) und Onboard-Unit (15) und Senden der Sitzungskennung (SID) an den Transaktionsserver (14);
Erzeugen von Positionsmeldungen (posᵢ) im Mobiltelefon (20) und Versenden der Positionsmeldungen (posᵢ) unter der Sitzungskennung (SID) an den Transaktionsserver (14) zur Erzeugung von Mauttransaktionen (TR);
wenn die Onboard-Unit (15) eine Mautbake (7) passiert, Protokollieren der Passage in einem Bakenprotokoll (45, 47) unter der Sitzungskennung (SID); und
im Transaktionsserver (14), Gegenprüfen der für die Sitzungskennung (SID) erzeugten Mauttransaktionen (TR) mit dem für die Sitzungskennung (SID) erstellten Bakenprotokoll (45, 47).

2. Verfahren nach Anspruch 1, **dadurch gekennzeichnet, dass** beim Passieren einer Mautbake (7) eine Bakenkennung (BIDₙ) von der Mautbake (7) an die Onboard-Unit (15) gesendet und in einem ersten Bakenprotokoll (45) in der Onboard-Unit (15) gespeichert wird; und
dass das erste Bakenprotokoll (45) mit der Sitzungskennung (SID) über das Mobiltelefon (20) an den Transaktionsserver (14) zur Gegenprüfung gesandt wird.

3. Verfahren nach Anspruch 1 oder 2, **dadurch gekennzeichnet, dass** beim Passieren einer Mautbake (7) die Sitzungskennung (SID) von der Onboard-Unit (15) an die Mautbake (7) und von dort mit einer Bakenkennung (BIDₙ) an den Transaktionsserver (14) gesandt wird; und
dass im Transaktionsserver (14) alle zu der Sitzungskennung (SID) empfangenen Bakenkennungen (BIDₙ) in einem zweiten Bakenprotokoll (47) gespeichert werden.

4. Verfahren nach den Ansprüchen 2 und 3, **dadurch gekennzeichnet, dass** beim Gegenprüfen auch das zweite Bakenprotokoll (47) gegen das erste Bakenprotokoll (45) gegengeprüft wird.

5. Verfahren nach einem der Ansprüche 1 bis 4, umfassend:
beim Passieren der Mautbake (7): Aufnehmen eines Fahrzeugmerkmals (PICₙ) mit einem Detektor (10) der Mautbake (7) und Speichern des Fahrzeugmerkmals (PICₙ) unter der Sitzungskennung (SID) in der Mautbake (7); und,
wenn das Gegenprüfen im Transaktionsserver (14) eine Unstimmigkeit anzeigt, Senden des gespeicherten Fahrzeugmerkmals (PICₙ) von der Mautbake (7) an den Transaktionsserver (14).

6. Verfahren nach Anspruch 5, **dadurch gekennzeichnet, dass** das Fahrzeugmerkmal (PICₙ) unter Zuhilfenahme der Sitzungskennung (SID) verschlüsselt gespeichert wird.

7. Verfahren nach einem der Ansprüche 1 bis 6, **dadurch gekennzeichnet, dass** das Gegenprüfen durch einen Kartenabgleich zwischen geografischen Positionen (Pₙ) von in dem oder den Bakenprotokoll (en) (45, 47) anhand ihrer Bakenkennungen (BIDₙ) gespeicherten Mautbaken (7) und den Positionsmeldungen (posᵢ) erfolgt.

8. Verfahren nach einem der Ansprüche 1 bis 7, **dadurch gekennzeichnet, dass** das Generieren der Sitzungskennung (SID) und das Senden des ersten Bakenprotokolls (45) jeweils durch eine temporäre Nahbereichsverbindung (27), bevorzugt NFC-Verbindung, zwischen Mobiltelefon (20) und Onboard-Unit (15) veranlasst wird.

9. Verfahren nach einem der Ansprüche 2 bis 8, **dadurch gekennzeichnet, dass** das erste Bakenprotokoll (45) in der Onboard-Unit (15) kryptographisch verschlüsselt und in dieser Form an das Mobiltelefon (20) gesandt wird.

10. Verfahren nach einem der Ansprüche 1 bis 9, **dadurch gekennzeichnet, dass** bei zumindest einem der genannten Schritte des Sendens der Sitzungskennung (SID) jeweils auch eine Onboard-Unit-Kennung (OID) der Onboard-Unit (15) mitgesandt wird.

11. Fahrzeuggestützte Anordnung für ein Verfahren nach einem der Ansprüche 1 bis 10, umfassend:
ein Mobiltelefon (20) mit einem Satellitenempfänger (21) zur Positionsbestimmung und einem Mobilfunkmodul (23) zur Positionsmeldung über ein Mobilfunknetz (18) an einen Transaktionsserver (14), und
eine Onboard-Unit (15) mit einem Kurzreichweiten-Sendeempfänger (16) zur Funkkommunikation mit einer Mautbake (7),
wobei das Mobiltelefon (20) und die Onboard-Unit (15) dafür ausgebildet sind, über eine gemeinsame Funkschnittstelle (27) eine Sitzungskennung (SID) auszutauschen, welche das Mobiltelefon (20) in einer Positionsmeldung (24) über das Mobilfunknetz (18) und die Onboard-Unit (15) in einer Funkkommunikation (9) mit einer Mautbake (7) verwendet.

12. Fahrzeuggestützte Anordnung nach Anspruch 11, **dadurch gekennzeichnet, dass** die Funkschnittstelle (27) eine NFC-Schnittstelle für temporäre NFC-Verbindungen ist.

13. Fahrzeuggestützte Anordnung nach Anspruch 11 oder 12, **dadurch gekennzeichnet, dass** die Onboard-Unit (15) dafür ausgebildet ist, von einer Mautbake (7) eine Bakenkennung (BIDₙ) zu empfangen und in einem ersten Bakenprotokoll (45) zu speichern.

14. Fahrzeuggestützte Anordnung nach Anspruch 13, **dadurch gekennzeichnet, dass** die Onboard-Unit (15) dafür ausgebildet ist, das erste Bakenprotokoll (45) über die gemeinsame Funkschnittstelle (27) an das Mobiltelefon (20) zu senden, und dass das Mobiltelefon (20) dafür ausgebildet ist, ein empfangenes erstes Bakenprotokoll (45) über das Mobilfunknetz (18) an den Transaktionsserver (14) zu senden.

15. Transaktionsserver für ein Verfahren nach einem der Ansprüche 1 bis 10, mit einer ersten Schnittstelle zu einem Mobilfunknetz (18) und einer zweiten Schnittstelle zu einem Netz geografisch verteilter Mautbaken (7), wobei der Transaktionsserver (14) dafür ausgebildet ist, über die erste Schnittstelle empfangene Positionsmeldungen (posᵢ) eines Mobiltelefons (20) mit über die erste und/oder zweite Schnittstelle empfangenen Bakenprotokollen (45, 47), in welchen vom Mobiltelefon (20) passierte Mautbaken (7) angegeben sind, gegenzuprüfen.

16. Transaktionsserver nach Anspruch 15, **dadurch gekennzeichnet, dass** der Transaktionsserver (14) dafür ausgebildet ist, im Falle einer beim Gegenprüfen auftretenden Unstimmigkeit über die zweite Schnittstelle ein in einer Mautbake (7) gespeichertes Fahrzeugmerkmal (PICₙ) anzufordern.

## Claims

1. A method for checking toll transactions, produced from position notifications of a mobile phone (20) connected via a mobile network (18) to a transaction server (14), with the aid of a network of distributed toll beacons (7), which can communicate via short-range radio (9) with on-board units (15) of passing vehicles (5) and are connected to the transaction server (14), comprising:
carrying a mobile phone (20) and an on-board unit (15) on a vehicle (5);
generating a session identifier (SID), exchanging the session identifier (SID) between mobile phone (20) and on-board unit (15) and transmitting the session identifier (SID) to the transaction server (14);
producing position notifications (posᵢ) in the mobile phone (20) and sending the position notifications (posᵢ) under the session identifier (SID) to the transaction server (14) in order to produce toll transactions (TR);
when the on-board unit (15) passes a toll beacon (7), logging the pass in a beacon log (45, 47) under the session identifier (SID); and
in the transaction server (14), double-checking the toll transactions (TR) produced for the session identifier (SID) with the beacon log (45, 47) created for the session identifier (SID).

2. The method according to Claim 1, **characterised in that** as a toll beacon (7) is passed a beacon identifier (BIDₙ) is transmitted from the toll beacon (7) to the on-board unit (15) and is stored in a first beacon log (45) in the on-board unit (15); and
**in that** the first beacon log (45) is transmitted with the session identifier (SID) via the mobile phone (20) to the transaction server (14) in order to be double-checked.

3. The method according to Claim 1 or 2, **characterised in that** as a toll beacon (7) is passed the session identifier (SID) is transmitted from the on-board unit (15) to the toll beacon (7) and from there is transmitted with a beacon identifier (BIDₙ) to the transaction server (14); and
**in that** all beacon identifiers (BIDₙ) received under the session identifier (SID) are stored in the transaction server (14) in a second beacon log (47).

4. The method according to Claims 2 and 3, **characterised in that** the second beacon log (47) is also double-checked against the first beacon log (45) during the double check.

5. The method according to one of Claims 1 to 4, comprising:
when passing the toll beacon (7): recording a vehicle feature (PICₙ) using a detector (10) of the toll beacon (7) and storing the vehicle feature (PICₙ) under the session identifier (SID) in the toll beacon (7); and
when the double check in the transaction server (14) indicates a mismatch, transmitting the stored vehicle feature (PICₙ) from the toll beacon (7) to the transaction server (14).

6. The method according to Claim 5, **characterised in that** the vehicle feature (PICₙ) is stored in an encrypted manner with the aid of the session identifier (SID).

7. The method according to one of Claims 1 to 6, **characterised in that** the double check is performed by means of map matching between geographical positions (Pₙ) of toll beacons (7) stored in the beacon log(s) (45, 47) on the basis of the beacon identifiers (BIDₙ) thereof and the position notifications (posᵢ).

8. The method according to one of Claims 1 to 7, **characterised in that** the generation of the session identifier (SID) and the transmission of the first beacon log (45) is initiated in each case by a temporary near-range connection (27), preferably an NFC connection, between the mobile phone (20) and on-board unit (15).

9. The method according to one of Claims 2 to 8, **characterised in that** the first beacon log (45) is encrypted crypto-graphically in the on-board unit (15) and is transmitted in this form to the mobile phone (20).

10. The method according to one of Claims 1 to 9, **characterised in that** an on-board unit identifier (OID) of the on-board unit (15) is in each case also transmitted with at least one of the aforementioned steps of transmission of the session identifier (SID).

11. A vehicle-based arrangement for a method according to one of Claims 1 to 10, comprising:
a mobile phone (20) with a satellite receiver (21) for position determination and a mobile communications module (23) for position notification via a mobile network (18) to a transaction server (14), and
an on-board unit (15) with a short-range transceiver (16) for radio communication with a toll beacon (7),
wherein the mobile phone (20) and the on-board unit (15) are configured to exchange a session identifier (SID) via a common radio interface (27), which session identifier is used by the mobile phone (20) in a position notification (24) via the mobile network (18) and is used by the on-board unit (15) in a radio communication (9) with a toll beacon (7).

12. The vehicle-based arrangement according to Claim 11, **characterised in that** the radio interface (27) is an NFC interface for temporary NFC connections.

13. The vehicle-based arrangement according to Claim 11 or 12, **characterised in that** the on-board unit (15) is configured to receive a beacon identifier (BIDₙ) from a toll beacon (7) and to store this in a first beacon log (45).

14. The vehicle-based arrangement according to Claim 13, **characterised in that** the on-board unit (15) is configured to transmit the first beacon log (45) via the common radio interface (27) to the mobile phone (20), and **in that** the mobile phone (20) is designed to transmit a received first beacon log (45) via the mobile network (18) to the transaction server (14).

15. A transaction server for a method according to one of Claims 1 to 10, comprising a first interface to a mobile network (18) and a second interface to a network of geographically distributed toll beacons (7), wherein the transaction server (14) is configured to double-check position notifications (posᵢ) of a mobile phone (20) received via the first interface with beacon logs (45, 47) received via the first and/or second interface, wherein toll beacons (7) passed by the mobile phone (20) are specified in said beacon logs.

16. The transaction server according to Claim 15, **characterised in that** the transaction server (14) is configured to request via the second interface a vehicle feature (PICₙ) stored in a toll beacon (7) in the case of a mismatch occurring during the double check.

## Revendications

1. Procédé de vérification de transactions de péage, qui sont générées à partir de messages indiquant la position d'un téléphone mobile (20) étant en liaison avec un serveur de transactions (14) par l'intermédiaire d'un réseau radio mobile (18), à l'aide d'un réseau de balises de péages (7) distribuées qui peuvent communiquer avec des unités embarquées (15) de véhicules qui passent (5) par l'intermédiaire d'ondes radio de courte portée (9) et sont en liaison avec le serveur de transactions (14), comprenant :
l'embarquement d'un téléphone mobile (20) et d'une unité embarquée (15) sur un véhicule (5) ;
la génération d'un identifiant de session (SID), un échange de l'identifiant de session (SID) entre le téléphone mobile (20) et l'unité embarquée (15) et un envoi de l'identifiant de session (SID) au serveur de transactions (14) ;
la création de messages indiquant la position (posᵢ) dans le téléphone portable (20) et la transmission des messages indiquant la position (posᵢ) sous l'identifiant de session (SID) au serveur de transactions (14) pour la création de transactions de péage (TR) ;
lorsque l'unité embarquée (15) passe une balise de péage (7), l'enregistrement du passage dans un protocole de balisage (45, 47) sous l'identifiant de session (SID) ; et
dans le serveur de transactions (14), la contre-vérification des transactions de péages (TR) générées pour l'identifiant de session (SID) avec le protocole de balisage (45, 47) établi pour l'identifiant de session (SID).

2. Procédé selon la revendication 1, **caractérisé en ce que**, lors du passage d'une balise de péage (7), un identifiant de balise (BIDₙ) est envoyé de la balise de péage (7) à l'unité embarquée (15) et est enregistré dans un premier protocole de balisage (45) dans l'unité embarquée (15) ; et
que le premier protocole de balisage (45) est envoyé avec l'identifiant de session (SID) par l'intermédiaire du téléphone mobile (20) au serveur de transactions (14) pour la contre-vérification.

3. Procédé selon les revendications 1 ou 2, **caractérisé en ce que**, lors du passage d'une balise de péage (7), l'identifiant de session (SID) est envoyé de l'unité embarquée (15) vers la balise de péage (7) et de là vers un serveur de transactions (14) accompagnée d'un identifiant de balise (BIDₙ) ; et
que tous les identifiants de balise (BIDₙ) reçus correspondant à l'identifiant de session (SID) sont stockés dans un deuxième protocole de balise (47) dans le serveur de transactions (14).

4. Procédé selon les revendications 2 et 3, **caractérisé en ce que**, lors de la contre-vérification, le deuxième protocole de balise (47) est également vérifié vis-à-vis du premier protocole de balise (45).

5. Procédé selon l'une des revendications 1 à 4, comprenant :
lors du passage de la balise de péage (7) : le relevé d'une caractéristique de véhicule (PICₙ) avec un détecteur (10) de la balise de péage (7) et le stockage de la caractéristique de véhicule (PICₙ) sous l'identifiant de session (SID) dans la balise de péage (7) ; et
lorsque la contre-vérification montre un différend dans le serveur de transaction (14), l'envoi de la caractéristique de véhicule (PICₙ) stockée de la balise de péage (7) vers le serveur de transactions (14).

6. Procédé selon la revendication 5, **caractérisé en ce que** la caractéristique de véhicule (PICₙ) est stockée cryptée en faisant appel à l'aide de l'identifiant de session (SID).

7. Procédé selon l'une des revendications 1 à 6, **caractérisé en ce que** la contre-vérification est effectuée par un alignement de cartes entre des positions géographiques (Pₙ) des balises de péage (7) stockées dans le ou dans les protocole(s) de balise (45, 47) à l'aide de leurs identifiants de balise (BIDₙ) et les messages indiquant la position (posᵢ).

8. Procédé selon l'une des revendications 1 à 7, **caractérisé en ce que** la génération de l'identifiant de session (SID) et l'envoi du premier protocole de balise (45) sont conditionnés chacun par une liaison de courte portée (27) temporaire, de préférence une liaison NFC, entre le téléphone mobile (20) et l'unité embarquée (15).

9. Procédé selon l'une des revendications 2 à 8, **caractérisé en ce que** le premier protocole de balise (45) est encodé de manière cryptographique dans l'unité embarquée (15) et est envoyé dans cette forme au téléphone mobile (20).

10. Procédé selon l'une des revendications 1 à 9, **caractérisé en ce que**, lors d'au moins une desdites étapes d'envoi de l'identifiant de session (SID), chaque fois, également, un identifiant d'unité embarquée (OID) de l'unité embarquée (15) est envoyé simultanément.

11. Ensemble monté sur véhicule destiné à un procédé selon l'une des revendications 1 à 10, comprenant :
un téléphone mobile (20) avec un récepteur satellite (21) pour l'évaluation de la position et un module radio mobile (23) pour l'émission de messages indiquant la position par l'intermédiaire d'un réseau radio mobile (18) à un serveur de transaction (14), et
une unité embarquée (15) avec un émetteur-récepteur de courte portée (16) pour la communication radio avec une balise de péage (7),
où le téléphone mobile (20) et l'unité embarquée (15) sont conçus pour échanger, par l'intermédiaire d'une interface radio (27) commune, un identifiant de session (SID), lequel est utilisé par le téléphone mobile (20) dans un message indiquant la position (24) par le réseau radio mobile (18) et par l'unité embarquée (15) dans une communication radio (9) avec une balise de péage (7).

12. Ensemble monté sur véhicule selon la revendication 11, **caractérisé en ce que** l'interface radio (27) est une interface NFC pour des liaisons NFC temporaires.

13. Ensemble monté sur véhicule selon les revendications 11 ou 12, **caractérisé en ce que** l'unité embarquée (15) est conçue pour recevoir un identifiant de balise (BIDₙ) d'une balise de péage (7) et pour le stocker dans un premier protocole de balise (45).

14. Ensemble monté sur véhicule selon la revendication 13, **caractérisé en ce que** l'unité embarquée (15) est conçue pour envoyer le premier protocole de balise (45) vers le téléphone mobile (20) par l'intermédiaire de l'interface radio (27) commune, et que le téléphone mobile (20) est conçu pour envoyer une premier protocole de balise (45) vers le serveur de transactions (14) par l'intermédiaire du réseau radio mobile (18).

15. Serveur de transactions pour un procédé selon l'une des revendications 1 à 10, avec une première interface vers un réseau radio mobile (18) et une deuxième interface vers un réseau de balises de péages (7) distribuées, où le serveur de transactions (14) est conçu pour effectuer une contre-vérification de messages indiquant la position (posᵢ) d'un téléphone mobile (20) reçus par l'intermédiaire d'une première interface avec des protocoles de balise (45, 47) reçus par l'intermédiaire des première et/ou deuxième interfaces, dans lesquels les balises de péages (7) passées sont indiquées par le téléphone mobile (20).

16. Serveur de transactions selon la revendication 15, **caractérisé en ce que** le serveur de transactions (14) est conçu pour, dans le cas d'un différend détecté lors de la contre-vérification, demander une caractéristique de véhicule (PICₙ) stockées dans une balise de péage (7) par l'intermédiaire de la deuxième interface.
